# EUROPEAN PATENT APPLICATION

(11) **EP 3 540 408 A1**
(43) Date of publication of application: **18.09.2019**
(21) Application number: 17870227.0
(22) Date of filing: 31.10.2017
(51) Int. Cl.: G01N 3/00

(54) **METHOD OF MANUFACTURING CTOD TEST PIECE, AND PLASTIC STRAIN ADJUSTING JIG**

(30) Priority: 09.11.2016 JP 2016219236
(71) Applicant: Nippon Steel Corporation, Tokyo 1008071 (JP)
(72) Inventor: SHIMADA, Yusuke, Tokyo 100-8071 (JP); INOUE, Takehiro, Tokyo 100-8071 (JP)
(74) Representative: Zimmermann & Partner Patentanwälte mbB
(86) International application number: PCT/JP2017/039331
(87) International publication number: WO 2018/088273

(57) **Abstract**

After obtaining a rectangular parallelepiped piece in which a first base metal, a weld zone and a second base metal are arranged so as to be aligned in the longitudinal direction from a joint steel member, a portion of the weld zone is cut to provide a slit-shaped notch portion in the piece. A first conductive member is arranged above a surface of the piece that includes an edge on one side of the notch portion in the longitudinal direction, a second conductive member is arranged above a surface of the piece that includes an edge on the other side of the notch portion in the longitudinal direction, and the first and second conductive members are fixed to the piece. A gap between the first conductive member and the second conductive member in the longitudinal direction is set to a predetermined space. The first conductive member and the second conductive member are electrically connected to an external power supply, respectively, and a bending load is applied to the piece in a direction such that the notch portion closes. The bending load is removed once contact between the first conductive member and the second conductive member is electrically ascertained, and thereafter a fatigue precrack is formed at a tip of the notch portion to obtain a CTOD test specimen.

## Description

### TECHNICAL FIELD

The present invention relates to a method for manufacturing a CTOD test specimen, and a jig for controlling plastic strain.

### BACKGROUND ART

In general, welded joints are used in building ships, marine structures and liquefied gas storage tanks etc. (hereunder, abbreviated as "ships etc."). Therefore, when designing ships etc., it is necessary to adequately examine the reliability of the welded joints from a fracture mechanics viewpoint.

A crack tip opening displacement (CTOD) test is utilized to evaluate the reliability of a weld zone (see Non-Patent Document 1). In the case of evaluating the reliability of a welded joint by CTOD test method, in general, a notch portion and a fatigue precrack are formed in a weld zone of a test specimen. The test specimen in which the notch portion and fatigue precrack are formed is then subjected to a three-point bending test, and a critical CTOD is determined. The term "critical CTOD" refers to a crack tip opening displacement when unstable fracture occurs without increase in load in a three-point bending test.

In this connection, because welding residual stress (hereinafter, also referred to simply as "residual stress") arises in the weld zone of the test specimen, in some cases it is difficult to form an appropriate fatigue precrack. Specifically, in some cases a linear fatigue precrack cannot be formed. Therefore, removing residual stress methods have already been proposed.

For example, Patent Document 1 discloses a local compression process as one processing method for removing welding residual stress.

On the other hand, as one processing method for removing welding residual stress, Patent Document 2 discloses a reverse bending process that applies a compressive preload in a direction such that the notch portion closes, and then removes the load.

### LIST OF PRIOR ART DOCUMENTS

### NON PATENT DOCUMENT

Non-Patent Document 1: "Japan Welding Engineering Society Standards, WES 1108, Standard test method for crack-tip opening displacement fracture toughness measurement", The Japan Welding Engineering Society, 1995

### PATENT DOCUMENT

Patent Document 1: JP2-45800Y
Patent Document 2: JP2011-169745A

### SUMMARY OF INVENTION

### TECHNICAL PROBLEM

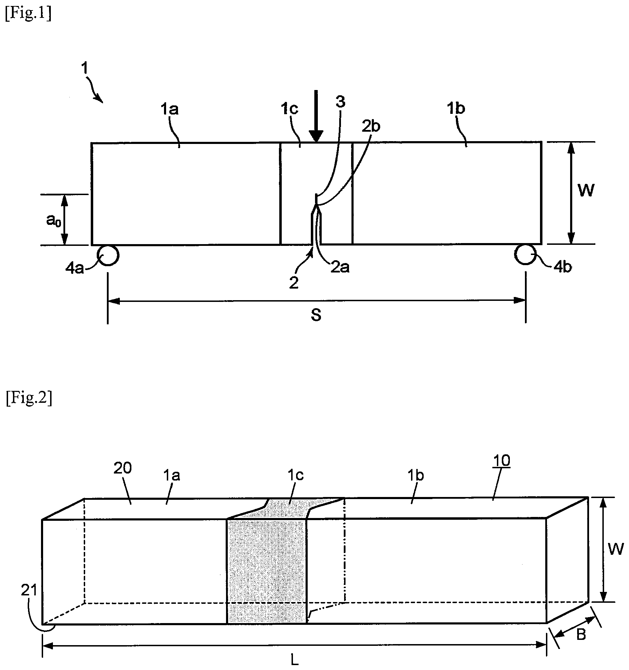

Figure 1 is a side view that illustrates an example of a three-point bending test specimen that is used in a CTOD test.

Referring to Figure 1, a three-point bending test specimen 1 (hereinafter, abbreviated as "test specimen 1") has a substantially rectangular parallelepiped shape. The test specimen 1 is a welded joint test specimen having a base metal 1a, a base metal 1b and a weld zone (weld metal) 1c. The test specimen 1 is extracted from a joint steel member (not illustrated in the drawings) such that the weld zone 1c is located at approximately the central part in the longitudinal direction of the test specimen 1. A notch portion 2 is formed on the undersurface side at a position at the central part in the longitudinal direction of the test specimen 1. More specifically, the notch portion 2 is formed in the weld zone 1c. The notch portion 2 has a V-shaped tip portion 2a. A tip 2b of the notch portion 2 is formed, for example, in an approximately semicircular shape that has a predetermined curvature. A fatigue precrack 3 is formed so as to extend upward (the width direction of the test specimen 1) from the tip 2b of the notch portion 2. The fatigue precrack 3 is formed after residual stress has been removed from the vicinity of the tip 2b of the notch portion 2. Note that, although a not detailed description will be provided herein, the dimensions of the test specimen 1 are, for example, defined similarly to the dimensions of a standard three-point bending test specimen described in the aforementioned Non-Patent Document 1.

When performing a CTOD test, a clip gauge (not illustrated in the drawings) is attached to the notch portion 2. Then, in a state in which both ends on the underside of the test specimen 1 are supported by supporting members 4a and 4b, three-point bending of the test specimen 1 is performed by pressing the central part of the top surface of the test specimen 1 downward. In addition, the value of the critical CTOD is determined based on an opening displacement of the notch portion 2 that is measured using the clip gauge. Note that, a width W of the test specimen 1 and a span S between the supporting members 4a and 4b in the longitudinal direction of the test specimen 1 are illustrated in Figure 1.

According to the processing methods disclosed in Patent Documents 1 and 2, a compression load is applied in advance to a portion at which a fatigue precrack is formed in a test specimen. By this means, a plastic strain is imparted to the portion at which the fatigue precrack is formed, and thus residual stress can be removed.

However, in the case of a local compression process, the specimen thickness is the actual plate thickness of the welded joint that is the evaluation object. In addition, a compression load that is applied to the test specimen and the diameter of a punch for applying the load increase in accordance with the strength and plate thickness of the test specimen. Therefore, for example, in the case of performing an evaluation of a welded joint composed of an extremely thick, high-strength steel plate, the load and the diameter of the punch must be made large. In this case, a high-capacity testing apparatus is required, and the cost of the test for reliability evaluation increases.

On the other hand, a reverse bending process is a process in which, after a notch portion is formed in a test specimen, the test specimen is subjected to bending in the reverse direction to the bending direction of a test specimen in the CTOD test (hereunder, the bending in the CTOD test may also be referred to as "forward bending"), to thereby impart a compressive plastic strain (hereunder, referred to simply as "plastic strain") to a portion in the vicinity of the tip of the notch portion. A load that is required when removing residual stress by means of the reverse bending process is of the same level as a load applied when performing the CTOD test. Therefore, even in the case of removing residual stress of a high-strength test specimen, in comparison to the local compression process, it is not necessary to apply a large load, and hence a high-capacity testing apparatus need not be used for removing residual stress. Therefore, in a case where the reverse bending process is utilized, it is also possible to reduce the test cost in comparison to a case where a local compression process is utilized.

In this case, if the amount of plastic strain fluctuates during reverse bending, the value for the critical CTOD will also fluctuate. Therefore, controlling the amount of plastic strain is particularly important in order to increase the measurement accuracy of a CTOD test that utilizes a reverse bending process. It is considered that methods for controlling the amount of plastic strain include, for example, a method in which a gauge plate having a predetermined thickness is inserted into the notch portion, and in that state, reverse bending is performed until the gauge plate can no longer slide between the inner walls of the notch portion, and a method in which reverse bending is performed in a state in which a gauge plate having a predetermined thickness is inserted into the notch portion, and a reverse bending load that is detected by a load meter is monitored. However, in each of these methods the control accuracy is low, and it is difficult to accurately perform reverse bending so that a predetermined amount of plastic strain is obtained.

Specifically, of the aforementioned two methods, according to the first method, a decision as to whether or not the gauge plate can slide depends on the sensory perception of the operator. Therefore, accurately performing reverse bending so as to obtain a predetermined amount of plastic strain is difficult.

On the other hand, according to the second method, it is considered that the reverse bending process can be stopped at a predetermined reverse bending amount if it is possible to accurately detect when the reverse bending load increases due to contact between the gauge plate and the inner walls of the notch portion. However, the amount of increase in the reverse bending load (i.e. the amount of change between the reverse bending load immediately before the gauge plate and the inner walls of the notch portion contact, and the reverse bending load immediately after the contact) at the moment at which the gauge plate and the inner walls of the notch portion contact is considerably smaller than the size of the reverse bending load before the gauge plate and the inner walls of the notch portion contact. Therefore, it is difficult for an operator to distinguish between an increase in a load that arises due to contact between the gauge plate and the inner walls of the notch portion, and variations in the load (variations in the detection value of the load meter that are caused by noise and the like) simply by looking at the detection value of a load meter. Therefore, it is difficult to accurately detect the time point at which the gauge plate and the inner walls of the notch portion come in contact. Accordingly, it is difficult to accurately perform reverse bending so that a predetermined amount of plastic strain is obtained based on changes in the load (changes in the detection value of the load meter).

Further, according to these methods, while inserting a gauge plate into the notch portion, the operator must proceed with the reverse bending process and determine whether or not a predetermined reverse bending amount has been reached. Consequently, the operation is extremely troublesome.

The present invention was conceived to solve such problems of the prior art, and an objective of the present invention is to provide a method for manufacturing, with high accuracy and at low cost, a test specimen of a welded joint to be provided for a CTOD test method (hereinafter, referred to as "CTOD test specimen"), and a jig for controlling plastic strain of a CTOD test specimen.

### SOLUTION TO PROBLEM

To solve the aforementioned problems, the present inventors conducted various studies with a view to manufacturing a CTOD test specimen with high accuracy and at low cost, and as a result completed the present invention.

The gist of the present invention is a method for manufacturing a CTOD test specimen, and a jig for controlling plastic strain that are described hereunder.
[1] A method for manufacturing a CTOD test specimen to be provided for a CTOD test method from a joint steel member having a first base metal, a weld zone and a second base metal, the method comprising:
   (1) a step of cutting the joint steel member to obtain a rectangular parallelepiped piece in which the first base metal, the weld zone and the second base metal are arranged so as to be aligned in a longitudinal direction;
   (2) a step of cutting a portion of the weld zone at a central part in the longitudinal direction of the piece to provide a slit-shaped notch portion;
   (3) a step of arranging a first conductive member above a surface of the piece that includes an edge on one side of the notch portion in the longitudinal direction, arranging a second conductive member above a surface of the piece that includes an edge on another side of the notch portion in the longitudinal direction, and fixing the first and second conductive members to the piece in an insulated state such that a predetermined space is secured between the first conductive member and the second conductive member in the longitudinal direction;
   (4) a step of electrically connecting the first conductive member and the second conductive member to an external power supply, respectively;
   (5) a step of applying a bending load to the piece in a direction such that the notch portion closes;
   (6) a step of removing the load once contact between the first conductive member and the second conductive member is electrically ascertained; and
   (7) a step of forming a fatigue precrack in a tip of the notch portion.
[2] The method for manufacturing a CTOD test specimen according to [1] above, wherein, in the step of (3):
   the first conductive member and the second conductive member are fixed to the piece in a state in which insulating sheets are interposed between the piece and the first and second conductive members.
[3] The method for manufacturing a CTOD test specimen according to [2] above, wherein, in the steps of (3) and (4):
   the first conductive member and the second conductive member are fixed to the piece in a state in which conductive cables that are electrically connected to external electrodes are in contact with the insulating sheets and the first and second conductive members.
[4] The method for manufacturing a CTOD test specimen according to [2] or [3] above, wherein, in the step of (3):
   the first conductive member and the second conductive member are fixed to the piece by means of an insulated screw.
[5] The method for manufacturing a CTOD test specimen according to [4] above, wherein, in the step of (3):
   a threaded hole for a knife edge fixing screw formed in the piece is used as a threaded hole for the insulated screw.
[6] A jig for controlling plastic strain that is attachable to a rectangular parallelepiped piece having a notch portion, when forming a fatigue precrack in the piece to manufacture a CTOD test specimen, prior to formation of the fatigue precrack, the jig for controlling plastic strain being used in a step of applying a bending load to the piece in a direction such that the notch portion closes, and thereafter removing welding residual stress by removing the bending load, the jig for controlling plastic strain comprising:
   a pair of main body portions composed of an electrically conductive material; and
   conductive cables for electrically connecting the pair of main body portions to external electrodes;
   wherein each of the pair of main body portions has, at a central part, a through-hole through which a screw for fixing the main body portion to the piece is inserted.

### ADVANTAGEOUS EFFECTS OF INVENTION

According to the present invention, a CTOD test specimen of a welded joint can be manufactured with high accuracy and at low cost.

### BRIEF DESCRIPTION OF DRAWINGS

Figure 1 is a side view illustrating one example of a three-point bending test specimen that is used in a CTOD test.
Figure 2 is a perspective view of a rectangular parallelepiped piece (piece at a partway stage during manufacture of a CTOD test specimen) that is cut out from joint steel member.
Figure 3 is a perspective view of a piece (piece at a partway stage during manufacture of a CTOD test specimen) obtained by forming a notch portion in the piece illustrated in Figure 2.
Figure 4 is a side view illustrating an installation state of a jig for controlling plastic strain during a reverse bending process.
Figure 5 is a top view illustrating an installation state of a jig for controlling plastic strain during a reverse bending process.
Figure 6 is a side view illustrating an installation state of a knife edge during a CTOD test.
Figure 7 is a side view illustrating another example of an installation state of a jig for controlling plastic strain during a reverse bending process.
Figure 8 is a side view illustrating a state during a reverse bending process.
Figure 9 is a side view of a CTOD test specimen.

### DESCRIPTION OF EMBODIMENTS

### 1. Method for manufacturing CTOD Test Specimen

A method for manufacturing a CTOD test specimen according to the present embodiment is a method that manufactures a test specimen to be provided for a CTOD test method from a joint steel member that has a first base metal, a weld zone and a second base metal.

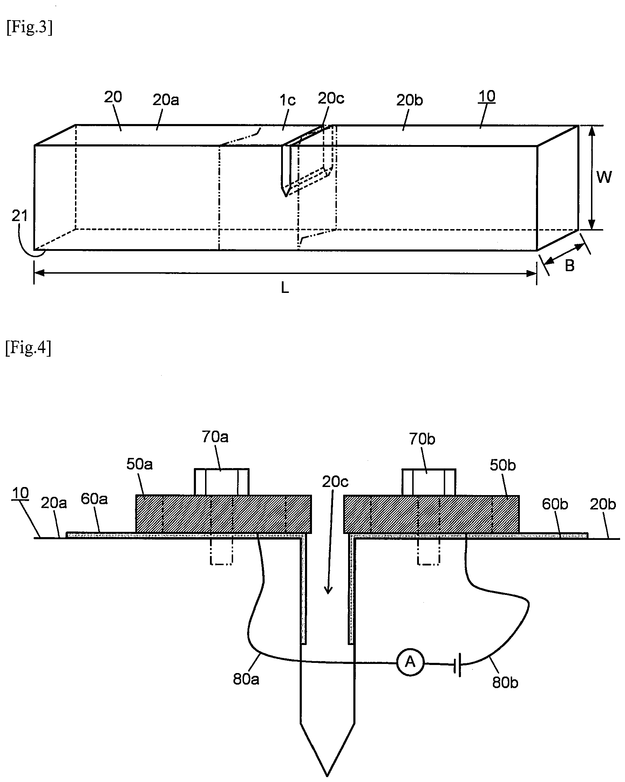

As illustrated in Figure 2, in the method for manufacturing a CTOD test specimen according to the present embodiment, firstly, a joint steel member (welded joint) is cut to obtain a rectangular parallelepiped piece 10 in which a first base metal 1a, a weld zone 1c and a second base metal 1b are arranged so as to be aligned in the longitudinal direction. The external shape (thickness, width and length) of the piece 10 serves as it is as the external shape of a CTOD test specimen. Although the external shape of a CTOD test specimen may be suitably set according to the purpose, typically, the external shape is a thickness (depth direction in the drawing) B = 25 mm, a width (vertical direction in the drawing) W = 50 mm (= 2B), and a length (horizontal direction in the drawing) L = 240 mm (≥ 9B). Note that, in the present embodiment, the width direction of the piece 10 (direction indicated by the arrow for the width W) is taken as the vertical direction. More specifically, based on the center of the piece 10 as a reference, a side on which a notch portion 20c (see Figure 3) that is described later is formed is taken as the upward side and the opposite side thereto is taken as the downward side. Further, in the piece 10, of two side faces 20 and 21 that are perpendicular to the vertical direction, the side face 20 in which the notch portion 20c that is described later is formed is taken as the top face, and the other side face 21 is taken as the bottom face. Hereinafter, the side face 20 is described as "top face 20".

Next, as illustrated in Figure 3, at a central part in the longitudinal direction of the piece 10, at least one part of the weld zone 1c is cut to provide a slit-shaped notch portion 20c. Although in the example illustrated in Figure 3 the notch portion 20c is provided at a position that includes a fusion line, depending on the purpose, the notch portion 20c may be provided at the central part in the longitudinal direction of the weld zone 1c or at a position that includes a weld HAZ (heat affected zone). Note that, in the example illustrated in Figure 3, the top face 20 of the piece 10 is divided into two surfaces 20a and 20b by the notch portion 20c. The surface 20a includes an edge on one side in the longitudinal direction of the notch portion 20c, and the surface 20b includes an edge on the other side in the longitudinal direction of the notch portion 20c.

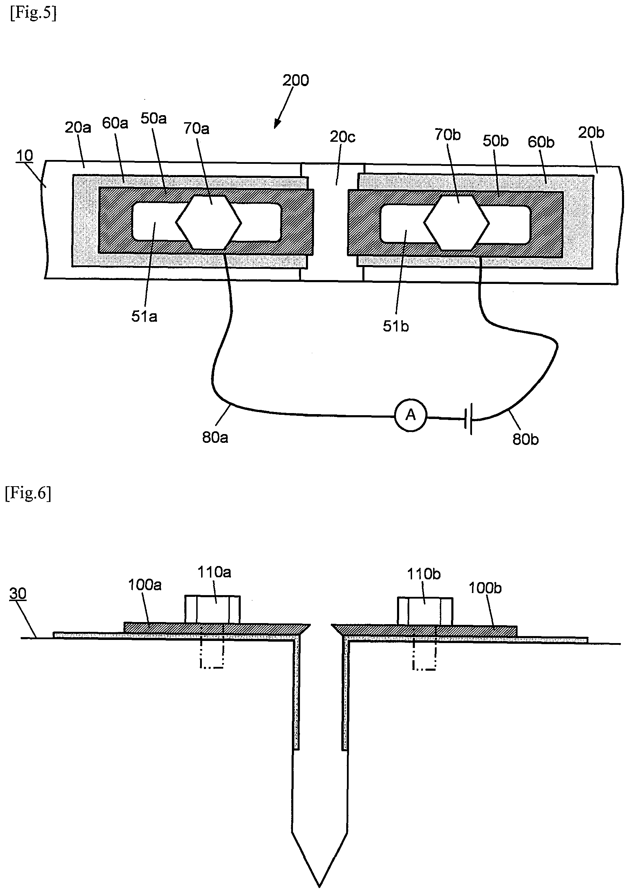

Further, as illustrated in Figure 4 and Figure 5, in the piece 10 in which the notch portion 20c is provided, a first conductive member 50a is arranged above the surface 20a, and a second conductive member 50b is arranged above the surface 20b, and the first conductive member 50a and the second conductive member 50b are fixed to the piece 10. In the present embodiment, a gap between the first conductive member 50a and the second conductive member 50b in the longitudinal direction of the piece 10 is set to a predetermined space. The gap between the first conductive member 50a and the second conductive member 50b can be adjusted using, for example, a gauge plate having a predetermined thickness. Further, the first conductive member 50a and the second conductive member 50b are each fixed to the piece 10 in a state in which the first conductive member 50a and the second conductive member 50b are electrically insulated from the piece 10. At this time, insulation of the first conductive member 50a and second conductive member 50b from the piece 10 can be ensured, for example, by interposing an insulating material between the first and second conductive members 50a and 50b and the piece 10. In the present embodiment, insulating sheets 60a and 60b are interposed between the first and second conductive members 50a and 50b and the piece 10. Further, an insulating material may be coated in advance onto the rear face (face that faces the piece 10 side) of each of the first conductive member 50a and the second conductive member 50b to form an insulating film.

Note that, in the present embodiment, in order to accurately detect a reverse bending amount of the piece 10, it is necessary to precisely adjust the aforementioned gap between the first conductive member 50a and the second conductive member 50b. With regard to this point, in the present embodiment, the first conductive member 50a and the second conductive member 50b that have a predetermined thickness can be attached to the piece 10 in a state in which the piece 10 has been detached from a machine that performs a reverse bending process (three-point bending testing machine). In this case, because an operator can perform operations on the piece 10 that is in a stationary state, and not on the piece 10 that is in the course of undergoing a reverse bending process, the operator can easily and accurately adjust the aforementioned gap.

As illustrated in Figure 6, when conducting a CTOD test, for example, knife edges 100a and 100b are fixed on a CTOD test specimen 30 by means of knife edge fixing screws 110a and 110b, and a clip gauge (not illustrated in the drawing) is fitted onto the knife edges 100a and 100b. In this state, a bending load is applied to the CTOD test specimen 30 and the opening of the notch portion 20c widens, and changes in the distance between the knife edges is ascertained with the clip gauge. For this purpose, threaded holes for the knife edge fixing screws 110a and 110b are provided in the CTOD test specimen of the type illustrated in Figure 6. Therefore, as illustrated in Figure 4 and Figure 5, the aforementioned threaded holes can be used as threaded holes for bolts (insulated screws) 70a and 70b for fixing the first conductive member 50a and the second conductive member 50b to the piece 10.

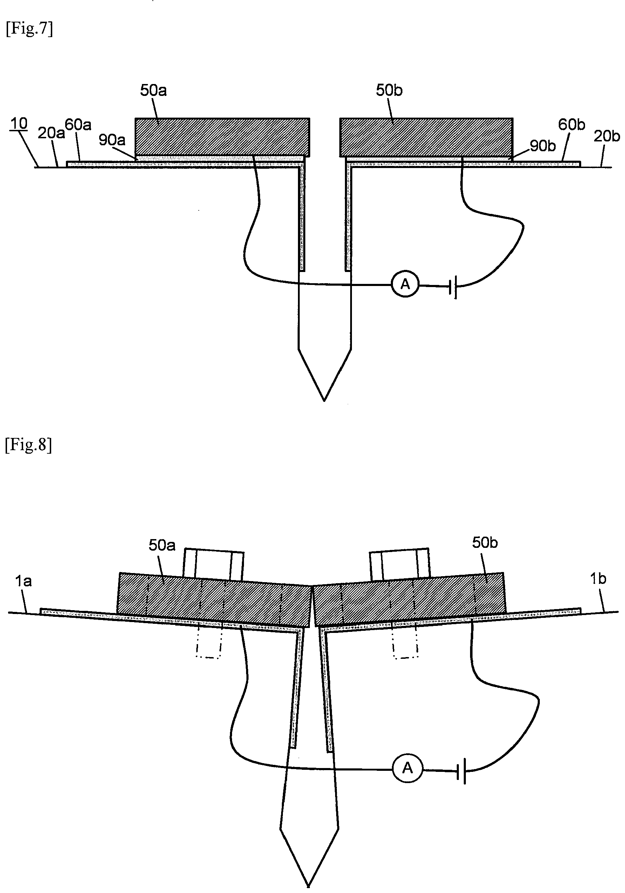

Note that, although the examples illustrated in Figure 4 and Figure 5 illustrate a case where the first conductive member 50a and the second conductive member 50b are fixed to the piece 10 using the bolts (insulated screws) 70a and 70b, for example, as illustrated in Figure 7, the first conductive member 50a and the second conductive member 50b may be fixed to the piece 10 using adhesive 90a and 90b. At such time, the work to fix the first conductive member 50a and the second conductive member 50b to the piece 10 is facilitated by preparing in advance, in a state in which a predetermined space is maintained, a piece in which the top face (face on the upper side in the drawing) of each of the first conductive member 50a and the second conductive member 50b is attached to a sheet-like material. Further, if an insulating adhesive is used as the adhesive 90a and 90b, the insulating sheets 60a and 60b can be omitted. For example, in the case of a test specimen in which knife edges are provided in advance inside a notch portion, the threaded hole for the knife edge fixing screws 110a and 110b as illustrated in Figure 6 are not provided. Therefore, on the assumption that the first conductive member 50a and the second conductive member 50b will be fixed by means of the bolts (insulated screws) 70a and 70b, it will be necessary to separately provide threaded holes for the bolts 70a and 70b. With respect to this point, with the configuration in which the first conductive member 50a and the second conductive member 50b are fixed by the adhesive 90a and 90b, a CTOD test specimen can be manufactured at a lower cost since it is not necessary to separately provide threaded holes.

As illustrated in Figure 4 and Figure 5, the first conductive member 50a and the second conductive member 50b are each electrically connected to an external power supply through conductive cables 80a and 80b. An ampere meter is connected to the conductive cables 80a and 80b, and thus the current-conduction state (current value) between the first conductive member 50a and the second conductive member 50b is being continuously detected. In the state illustrated in Figure 4 and Figure 5, because the first conductive member 50a and the second conductive member 50b are not contacting, the current value detected by the ampere meter is zero.

Note that, it is possible for the conductive cables 80a and 80b to be connected by, for example, a solder or the like to the first conductive member 50a and the second conductive member 50b. Further, for example, the conductive cables 80a and 80b that are electrically connected to external electrodes may be inserted between the insulating sheets 60a and 60b and the first and second conductive members 50a and 50b so as to contact the insulating sheets 60a and 60b and the first and second conductive members 50a and 50b. In this state, conduction between the first and second conductive members 50a and 50b and the conductive cables 80a and 80b may be secured by fastening the bolts (insulated screws) 70a and 70b so as to fix the first and second conductive members 50a and 50b to the piece 10 in a manner in which the conductive cables 80a and 80b are sandwiched therebetween. According to this method, the time and labor involved in performing soldering is saved.

In this state, as illustrated in Figure 8, in the reverse bending process, a bending load is applied to the piece 10 so that both ends of the piece 10 in the longitudinal direction (that is, the respective ends of the first base metal 1a and the second base metal 1b) move in the upward direction (upward direction in the drawing) with respect to the center portion of the piece 10 in the longitudinal direction,. In other words, a bending load is applied to the piece 10 in a direction such that the notch portion 20c of the piece 10 closes (that is, a direction that is the reverse of the bending direction of the test specimen in the CTOD test). By this means, compressive plastic strain can be imparted to a place at which a fatigue precrack is formed (portion that is below the tip of the notch portion 20c). The more the piece 10 bends in the direction in which the notch portion 20c closes, the narrower the space between the first conductive member 50a and the second conductive member 50b becomes. When the first conductive member 50a and the second conductive member 50b contact, an electric current is passed through a circuit that includes the first conductive member 50a, the second conductive member 50b and the conductive cables 80a and 80b, and consequently the detector (ampere meter) detects the electric current. In other words, in the present embodiment, the passage of a current between the first conductive member 50a and the second conductive member 50b can be detected by a detector. Accordingly, it is possible for an operator to ascertain that the first conductive member 50a and the second conductive member 50b have contacted each other, based on detection of the aforementioned current by the detector. Therefore, once contact between the first conductive member 50a and the second conductive member 50b is electrically ascertained by the detector, it suffices that the operator removes the reverse bending load that is being applied to the piece 10. Thus, according to the present embodiment, a determination as to whether or not the first conductive member 50a and the second conductive member 50b have contacted each other does not depend on the sensory perception of the operator. Consequently, the operator can precisely ascertain the time point at which a predetermined reverse bending amount (a bending amount corresponding to the space between the first conductive member 50a and the second conductive member 50b prior to reverse bending) is imparted to the piece 10, and can stop the reverse bending process at the appropriate timing. As a result, a predetermined plastic strain can be imparted to the piece 10, and welding residual stress can be suitably removed.

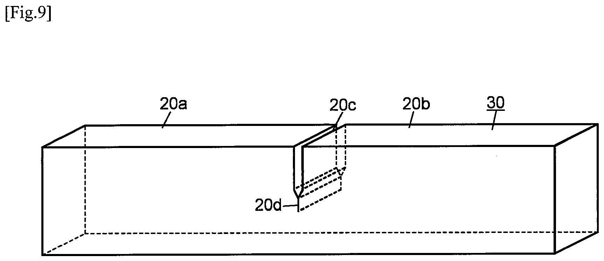

Subsequently, as illustrated in Figure 9, after conducting the aforementioned reverse bending process, a fatigue precrack 20d is formed at the tip of the notch portion 20c to obtain the CTOD test specimen 30. Therefore, a CTOD test specimen obtained by the method for manufacturing a CTOD test specimen according to the present embodiment is a test specimen from which welding residual stress has been suitably removed. Accordingly, by using a CTOD test specimen obtained by the manufacturing method according to the present embodiment, it is possible to conduct a highly accurate CTOD test.

### 2. Jig for Controlling Plastic Strain

In the method for manufacturing a CTOD test specimen according to the present embodiment, when forming a fatigue precrack in a rectangular parallelepiped piece having a notch portion to manufacture a CTOD test specimen, prior to forming the fatigue precrack, a step is executed in which welding residual stress is removed by applying a bending load to the piece in a direction such that the notch portion closes, and thereafter removing the bending load. In other words, a reverse bending process step is executed. In the reverse bending process step, a jig for controlling plastic strain 200 that is illustrated in Figure 4 and Figure 5 is used. The jig for controlling plastic strain 200 includes: main body portions (first conductive member and second conductive member) 50a and 50b that are composed of electrically conductive material; the conductive cables 80a and 80b for electrically connecting the main body portions 50a and 50b to external electrodes; and the bolts (insulated screws) 70a and 70b that fix the main body portions 50a and 50b to the piece 10. Through-holes 51a and 51b for inserting the bolts (insulated screws) 70a and 70b through are formed at a central part of the main body portions 50a and 50b, respectively. The main body portion 50a is fixed to the piece 10 in a state in which the main body portion 50a is arranged above the surface 20a that includes an edge on the aforementioned one side of the notch portion 20c of the piece 10, and the main body portion 50b is fixed to the piece 10 in a state in which the main body portion 50b is arranged above the surface 20b that includes an edge on the aforementioned other side of the notch portion 20c of the piece 10.

Further, as illustrated in Figure 5, the through-holes 51a and 51b have a substantially rectangular shape. The length of a short side of each of the through-holes 51a and 51b (length in the thickness direction (direction indicated by an arrow for the thickness B in Figure 3) of the piece 10) is less than the diameter of a circle inscribed inside the outer edge of the head of the respective bolts (insulated screws) 70a and 70b, and is greater than the external diameter of a thread part of the respective bolts 70a and 70b. According to this configuration, the respective fixing positions of the bolts (insulated screws) 70a and 70b in the main body portions 50a and 50b can be changed. Therefore, the space between the first conductive member 50a and the second conductive member 50b can be easily adjusted.

### INDUSTRIAL APPLICABILITY

According to the present invention, a CTOD test specimen of a welded joint can be manufactured with high accuracy and at low cost.

### REFERENCE SIGNS LIST

- 1: Test Specimen
- 1a: Base Metal (First Base Metal)
- 1b: Base metal (Second Base Metal)
- 1c: Weld Zone
- 2: Notch Portion
- 2a: Tip Portion
- 2b: Tip
- 3: Fatigue Precrack
- 4a, 4b: Supporting Member
- 10: Piece (Rectangular Parallelepiped piece)
- 20a: Surface of Piece Including One Edge of Notch Portion
- 20c: Notch Portion
- 20b: Surface of Piece Including Other Edge of Notch Portion
- 20d: Fatigue Precrack
- 30: CTOD Test Specimen
- 50a: First Conductive Member
- 50b: Second Conductive Member
- 51a, 51b: Through-hole
- 60a, 60b: Insulating Sheet
- 70a, 70b: Bolt (Insulated Screw)
- 80a, 80b: Conductive Cable
- 90a, 90b: Adhesive
- 100a, 100b: Knife Edge
- 110a, 110b: Knife Edge Fixing Screw
- 200: Jig for controlling Plastic Strain

## Claims

1. A method for manufacturing a CTOD test specimen to be provided for a CTOD test method from a joint steel member having a first base metal, a weld zone and a second base metal, the method comprising:
(1) a step of cutting the joint steel member to obtain a rectangular parallelepiped piece in which the first base metal, the weld zone and the second base metal are arranged so as to be aligned in a longitudinal direction;
(2) a step of cutting a portion of the weld zone at a central part in the longitudinal direction of the piece to provide a slit-shaped notch portion;
(3) a step of arranging a first conductive member above a surface of the piece that includes an edge on one side of the notch portion in the longitudinal direction, arranging a second conductive member above a surface of the piece that includes an edge on another side of the notch portion in the longitudinal direction, and fixing the first and second conductive members to the piece in an insulated state such that a predetermined space is secured between the first conductive member and the second conductive member in the longitudinal direction;
(4) a step of electrically connecting the first conductive member and the second conductive member to an external power supply, respectively;
(5) a step of applying a bending load to the piece in a direction such that the notch portion closes;
(6) a step of removing the load once contact between the first conductive member and the second conductive member is electrically ascertained; and
(7) a step of forming a fatigue precrack in a tip of the notch portion.

2. The method for manufacturing a CTOD test specimen according to claim 1, wherein, in the step of (3),
the first conductive member and the second conductive member are fixed to the piece in a state in which insulating sheets are interposed between the piece and the first and second conductive members.

3. The method for manufacturing a CTOD test specimen according to claim 2, wherein, in the steps of (3) and (4),
the first conductive member and the second conductive member are fixed to the piece in a state in which conductive cables that are electrically connected to external electrodes are in contact with the insulating sheets and the first and second conductive members.

4. The method for manufacturing a CTOD test specimen according to claim 2 or 3, wherein, in the step of (3),
the first conductive member and the second conductive member are fixed to the piece by means of an insulated screw.

5. The method for manufacturing a CTOD test specimen according to claim 4, wherein, in the step of (3),
a threaded hole for a knife edge fixing screw formed in the piece is used as a threaded hole for the insulated screw.

6. A jig for controlling plastic strain that is attachable to a rectangular parallelepiped piece having a notch portion, when forming a fatigue precrack in the piece to manufacture a CTOD test specimen, prior to formation of the fatigue precrack, the jig for controlling plastic strain being used in a step of applying a bending load to the piece in a direction such that the notch portion closes, and thereafter removing welding residual stress by removing the bending load, the jig for controlling plastic strain comprising:
a pair of main body portions composed of an electrically conductive material; and
conductive cables for electrically connecting the pair of main body portions to external electrodes;
wherein each of the pair of main body portions has, at a central part, a through-hole through which a screw for fixing the main body portion to the piece is inserted.
